# DEMANDE DE BREVET EUROPEEN

(11) **EP 0 750 114 A1**
(43) Date de publication de la demande: **27.12.1996**
(21) Numéro de dépôt: 96400345.3
(22) Date de dépôt: 20.02.1996
(51) Int. Cl.: F03G 7/06, G05D 23/19

(54) **Actionneur thermique double effet à grande course**

(30) Priorité: 22.02.1995 FR 9502041
(71) Demandeur: AEROSPATIALE Société Nationale Industrielle, 75781 Paris Cédex 16 (FR)
(72) Inventeur: Ramon, Yves, 06700 St Laurent du Var (FR); Sayede, Frédéric Noel, 06150 Cannes La Bocca (FR)
(74) Mandataire: Poulin, Gérard

(57) **Abrégé**

Un actionneur thermique double effet à grande course, utilisable notamment dans le domaine spatial, est formé d'éléments actifs (14, 16) et passif (18) reliant en série un organe d'entrée (10) à un organe de sortie (12) de telle sorte que l'élément passif (18) soit interposé entre deux éléments actifs, et orienté en sens inverse de ces derniers éléments, dans une direction (XX') d'application des efforts. Les éléments actifs (14,16) présentent un fort coefficient de dilatation thermique positif et sont associés à des moyens de chauffage. L'élément passif (18) présente un coefficient de dilation thermique faiblement positif, nul ou négatif. Avec un encombrement limité dans la direction (XX'), on commande ainsi un déplacement relatif important entre les organes d'entrée (10) et de sortie (12). L'actionneur présente de plus une raideur importante en traction, compression, flexion et torsion.

## Description

L'invention concerne un actionneur thermique sensible à une variation de température pour commander, avec une grande résolution et sur une distance relativement importante, un mouvement de translation relative entre un organe d'entrée et un organe de sortie, dans l'un et l'autre sens.

Un tel actionneur peut être utilisé dans tous les cas où l'on désire commander un déplacement sur une distance relativement importante (plusieurs centaines de microns) avec une résolution submicronique, en présence d'efforts et de moments relativement élevés, tout en disposant d'un encombrement limité. Une application privilégiée de l'actionneur selon l'invention concerne donc la commande des éléments optiques et des antennes qui équipent les engins spatiaux ainsi que la commande des télescopes et des instruments optiques ou radioélectriques au sol.

Il n'existe pas, à l'heure actuelle, d'actionneur thermique double effet permettant de commander un déplacement avec une grande résolution et sur une grande course tout en étant d'un encombrement limité.

L'invention a précisément pour objet un actionneur double effet dépourvu de jeu, présentant une résolution submicronique et une course de plusieurs centaines de microns, capable de transmettre des efforts de plusieurs dizaines de kilonewtons, des moments de plusieurs centaines de newtons-mètres, présentant une raideur voisine de celle des éléments structuraux environnants, tenant dans un encombrement limité, et suffisamment isolé de l'environnement dans lequel il est intégré pour ne pas le perturber thermiquement.

Conformément à l'invention, ce résultat est obtenu au moyen d'un actionneur thermique, caractérisé par le fait qu'il comprend au moins deux éléments actifs, aptes à subir une augmentation de longueur dans une direction d'application d'efforts, sous l'effet d'une élévation de température, et inversement, et au moins un élément passif apte à subir une variation de longueur dans ladite direction inférieure à l'augmentation de longueur de chaque élément actif, sous l'effet de ladite augmentation de température, les éléments actifs et passif étant connectés bout à bout en série entre un organe d'entrée et un organe de sortie, chaque élément passif reliant deux éléments actifs consécutifs en étant orienté en sens inverse de ces derniers, selon ladite direction, de telle sorte que l'actionneur présente dans cette direction une longueur totale sensiblement inférieure à la somme des longueurs des éléments actifs.

Dans une forme de réalisation préférentielle de l'invention, les éléments actifs et passif sont des éléments tubulaires de diamètres différents, disposés coaxialement selon la direction d'application d'efforts.

Dans cette forme de réalisation préférentielle, l'actionneur comporte une cloche fixée à l'un des organes d'entrée et de sortie et entourant les éléments actifs et passif.

Afin d'éviter que l'actionneur ne perturbe thermiquement l'environnement dans lequel il est intégré, l'organe d'entrée est relié à un premier des éléments actifs par un premier élément thermiquement isolant et l'organe de sortie est relié à un deuxième des éléments actifs par un deuxième élément thermiquement isolant. Le premier et le deuxième éléments thermiquement isolants sont alors disposés selon la direction d'application des efforts.

Dans une première forme de réalisation de l'invention, le deuxième élément thermiquement isolant est interposé entre l'organe de sortie et une extrémité du deuxième élément actif adjacente à cet organe de sortie.

Dans une deuxième forme de réalisation de l'invention, l'un des éléments passifs est disposé coaxialement à l'intérieur du deuxième élément actif et fixé sur l'organe de sortie à une extrémité. Le deuxième élément thermiquement isolant est alors interposé entre une extrémité au deuxième élément actif adjacente à l'organe d'entrée et la deuxième extrémité de l'élément passif placé dans ce deuxième élément actif.

Bien que les éléments actifs de l'actionneur thermique puissent être des éléments réalisés en matériau à mémoire de forme, ils sont constitués de préférence par des éléments à coefficient de dilatation thermique positif.

L'élément passif peut être également un élément à coefficient de dilatation thermique positif, ce coefficient étant alors très inférieur à celui des éléments actifs. Dans ce cas, l'élément passif est relié aux éléments actifs adjacents par des troisièmes éléments thermiquement isolants, disposés selon la direction d'application des efforts.

L'élément passif peut aussi être un élément à coefficient de dilatation thermique au plus sensiblement égal à zéro, c'est-à-dire que son coefficient de dilatation thermique est soit négatif, soit sensiblement nul. Dans ce cas, l'élément passif peut être relié directement aux éléments actifs adjacents.

De préférence, la mise en oeuvre de l'actionneur dans l'un et l'autre sens est assuré par des moyens de chauffage et par des moyens de refroidissement associés aux éléments actifs. Dans certains cas, les moyens de refroidissement peuvent toutefois être omis si la variation de température nécessaire à la mise en oeuvre de l'actionneur dans le sens correspondant peut être obtenue par échange de chaleur avec l'environnement, par effet Peltier ou par tout autre moyen.

Pour donner à l'actionneur une raideur accrue, lorsque cela est nécessaire, des lames flexibles sont orientées perpendiculairement à la direction d'application d'efforts et relient l'organe d'entrée à une extrémité voisine de l'élément passif et l'organe de sortie à l'autre extrémité de l'élément passif. Lorsque l'actionneur comporte une cloche , au moins une autre lame flexible relie l'autre des organes d'entrée et de sortie (celui sur lequel la cloche n'est pas fixée) à l'extrémité voisine de la cloche.

On décrira à présent, à titre d'exemples non limitatifs, deux formes de réalisation préférentielles de l'invention, en se référant aux dessins annexés, dans lesquels :
- la figure 1 est une vue en coupe longitudinale illustrant une première forme de réalisation d'un actionneur thermique conforme à l'invention ; et
- la figure 2 est une vue comparable à la figure 1, illustrant une deuxième forme de réalisation de l'invention.

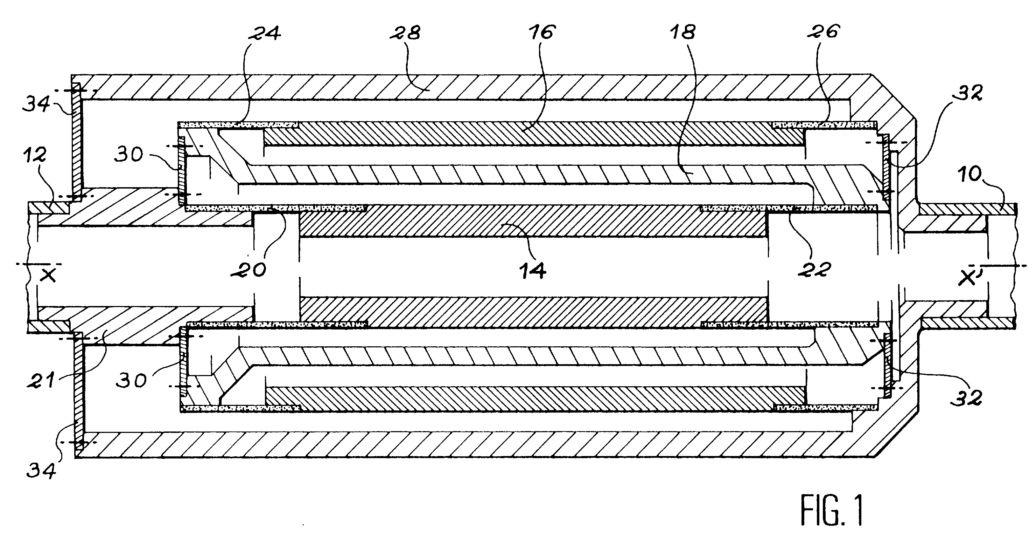

Dans la forme de réalisation représentée sur la figure 1, l'actionneur thermique selon l'invention présente un axe de symétrie longitudinal désigné par la référence XX'. Cet axe XX' correspond à l'axe d'application des efforts, selon lequel on désire commander un déplacement relatif entre un organe d'entrée 10 et un organe de sortie 12.

L'organe d'entrée 10 est lié rigidement à une structure de référence telle qu'une structure de satellite ou de sonde spatiale et l'organe de sortie 12 est lié rigidement à la pièce (élément optique ou autre) que l'on désire déplacer selon l'axe XX' par rapport à l'organe d'entrée 10. Dans la forme de réalisation illustrée sur la figure, les organes d'entrée 10 et de sortie 12 présentent une forme tubulaire et sont disposés coaxialement bout à bout, à une certaine distance l'un de l'autre, selon l'axe XX'.

Il est à noter dès à présent que les fonctions des organes 10 et 12 peuvent être inversées. En d'autres termes, l'organe d'entrée peut être constitué par l'organe 12 et l'organe de sortie par l'organe 10.

Dans l'actionneur thermique selon l'invention, le déplacement relatif entre les organes d'entrée 10 et de sortie 12 selon l'axe XX' est assuré par au moins deux éléments actifs 14 et 16 connectés bout à bout en série par l'intermédiaire d'un élément passif 18. De façon plus précise, l'élément passif 18 est orienté en sens inverse des éléments actifs 14 et 16 selon l'axe d'application d'effort XX', de telle sorte que la longueur totale de l'actionneur selon cet axe soit sensiblement inférieure à la somme des longueurs des éléments actifs 14 et 16.

Par "éléments actifs", on désigne des éléments aptes à subir une forte augmentation de longueur dans la direction de l'axe XX' sous l'effet d'une élévation de température. Bien que ces éléments actifs 14 et 16 puissent être réalisés en des matériaux à mémoire de forme, ils sont constitués de préférence en des matériaux à fort coefficient de dilatation thermique positif.

Le chauffage de ces éléments actifs 14 et 16 assurant le fonctionnement de l'actionneur dans un premier sens est généralement assuré par des moyens de chauffage (non représentés) associés à chacun d'entre eux. Ces moyens de chauffage peuvent notamment être constitués par des résistances électriques ou par tout système analogue susceptible d'élever la température des éléments 14 et 16 de manière contrôlée. Le refroidisement des éléments actifs 14 et 16, assurant le fonctionnement de l'actionneur dans l'autre sens, est généralement assuré par un échange de chaleur avec l'environnement (lorsque cela est possible), par liaison avec une source froide, par exemple à l'aide d'une tresse conductrice, ou par tout système analogue susceptible de diminuer la température des éléments actifs 14 et 16.

L'expression "élément passif" désigne au contraire un élément apte à subir une variation de longueur dans la direction de l'axe XX' inférieure à l'augmentation de longueur de chacun des éléments actifs 14 et 16 lors d'une élévation de température donnée. Ce résultat peut être obtenu soit en réalisant l'élément passif 18 en un matériau présentant un faible coefficient de dilatation thermique positif, soit en un matériau présentant un coefficient de dilatation thermique sensiblement nul ou même négatif.

Dans la forme de réalisation illustrée sur la figure 1, les éléments actifs 14 et 16 ainsi que l'élément passif 18 présentent tous trois une forme tubulaire et un diamètre différent, de telle sorte qu'ils sont disposés coaxialement les uns dans les autres selon l'axe XX'. De façon plus précise, l'élément actif interne 14 constitue un élément interne dont le diamètre extérieur est voisin de celui des organes d'entrée 10 et de sortie 12. Autour de cet élément actif interne 14 est placé l'élément passif 18, qui constitue un élément intermédiaire. L'élément passif 18 est lui-même entouré par l'élément actif 16, de plus grand diamètre qui constitue un élément externe.

Une première extrémité de l'élément actif interne 14, tournée vers la gauche sur la figure 1, est connectée à l'organe de sortie 12 par l'intermédiaire d'un élément tubulaire 20 thermiquement isolant. De façon plus précise, l'élément tubulaire 20 thermiquement isolant est fixé sur un manchon 21, lui même fixé dans l'organe de sortie 12. L'élément tubulaire 20 thermiquement isolant permet d'éviter que la chaleur transmise à l'élément actif interne 14 par les moyens de chauffage (non représentés) généralement associés à cet élément ne perturbe thermiquement les systèmes dont le déplacement est commandé par l'organe de sortie 12.

A son extrémité opposée, orientée vers la droite sur la figure 1, l'élément actif interne 14 est connecté bout à bout à l'extrémité adjacente de l'élément passif intermédiaire 18 qui l'entoure par un autre élément tubulaire 22 thermiquement isolant.

Lorsque le matériau constituant l'élément passif intermédiaire 18 est un matériau à coefficient de dilatation thermique positif, l'élément tubulaire 22 thermiquement isolant permet d'éviter qu'une mise en oeuvre des moyens de chauffage généralement associés à l'élément actif interne 14 n'entraîne un allongement de l'élément passif intermédiaire 18. En effet, du fait que l'élément passif intermédiaire 18 est orienté en sens inverse des éléments actifs 14 et 16, son allongement aurait pour conséquence de réduire la course totale de l'actionneur.

Au contraire, lorsque le matériau dans lequel est réalisé l'élément passif intermédiaire 18 est un matériau dont le coefficient de dilatation thermique est sensiblement nul ou négatif, l'élément tubulaire 22 thermiquement isolant peut être supprimé ou remplacé par un élément tubulaire réalisé en un matériau thermiquement conducteur.

L'extrémité opposée de l'élément passif intermédiaire 18, orientée vers la gauche sur la figure 1, est connectée à l'extrémité adjacente de l'élément actif externe 16 par un autre élément tubulaire 24 thermiquement isolant. Cet élément tubulaire 24 thermiquement isolant remplit une fonction analogue à celle de l'élément tubulaire 22 thermiquement isolant. Il peut donc être supprimé ou remplacé par un élément tubulaire thermiquement conducteur dans le cas où le matériau dans lequel est réalisé l'élément passif intermédiaire 18 est un matériau à coefficient de dilatation thermique sensiblement nul ou négatif.

Enfin, l'extrémité opposée de l'élément actif externe 16, c'est-à-dire l'extrémité de droite sur la figure 1, est connectée à l'organe d'entrée 10 par un autre élément tubulaire 26 thermiquement isolant. Cet élément tubulaire 26 thermiquement isolant remplit, vis-à-vis de la structure reliée à l'organe d'entrée 10, la même fonction que l'élément tubulaire 20 thermiquement isolant vis-à-vis des systèmes commandés par l'organe de sortie 12.

De façon plus précise, l'élément tubulaire 26 thermiquement isolant est fixé sur une cloche 28 dont une partie tubulaire de petit diamètre est fixée dans l'organe d'entrée 10. Cette cloche 28 entoure les éléments actifs 14 et 16 ainsi que l'élément passif intermédiaire 18, de façon à former un capot pour l'actionneur thermique. De façon plus précise, la cloche 28 comporte une partie tubulaire de relativement grand diamètre qui entoure sur toute leur longueur l'élément actif externe 16 ainsi que les éléments tubulaires 24 et 26 d'isolation thermique.

Pour compléter la description, on voit sur la figure 1 que l'extrémité de gauche de l'élément passif intermédiaire 18, qui est connectée à l'extrémité adjacente de l'élément actif externe 16, est également reliée au manchon 21 fixé à l'organe de sortie 12 par des lames flexibles 30 qui sont disposées dans un plan perpendiculaire à l'axe XX' lorsque l'actionneur est au repos, comme l'illustre la figure. Ces lames flexibles 30 sont orientées radialement par rapport à l'axe XX'. Elles peuvent éventuellement être remplacées par une rondelle flexible ou par tout mécanisme équivalent présentant une raideur importante dans la direction perpendiculaire à l'axe XX' d'application des efforts et une souplesse selon cet axe XX'.

De façon comparable, le caractère coaxial de l'élément actif externe 16 et de l'élément passif intermédiaire 18 est préservé par des lames flexibles 32 qui relient l'extrémité de droite de l'élément passif intermédiaire 18 en considérant la figure à une partie radiale de la cloche 28 attenante à l'organe d'entrée 10. Ces lames flexibles 32 sont également disposées dans un plan perpendiculaire à l'axe XX' lorsque l'actionneur est au repos et elles sont généralement orientées radialement par rapport à cet axe.

Enfin, des lames flexibles 34 relient l'extrémité de la cloche 28 orientée vers la gauche sur la figure, au manchon 21, à proximité immédiate de l'organe de sortie 12. Ces lames flexibles 34, qui sont placées dans un plan perpendiculaire à l'axe XX' et orientées radialement par rapport à cet axe lorsque l'actionneur est au repos, préservent le caractère coaxial de la cloche 28 vis-à-vis du reste de l'actionneur.

Lorsque l'actionneur thermique selon l'invention est au repos, les différentes pièces qui le constituent occupent la position illustrée sur la figure 1.

Lorsqu'un déplacement relatif entre les organes 10 et 12 doit être commandé, les moyens de chauffage et de refroidissement (non représentés) qui équipent le plus souvent les éléments actifs 14 et 16 sont mis en oeuvre de façon contrôlée. En variante, la mise en oeuvre dans un sens peut être effectuée par échange de chaleur avec l'environnement, comme on l'a déjà indiqué.

Du fait de l'échauffement piloté des éléments actifs 14 et 16, qui présentent l'un et l'autre un fort coefficient de dilatation thermique positif, ces deux éléments actifs s'allongent simultanément alors que la longueur de l'élément passif intermédiaire 18 reste pratiquement inchangée, soit du fait qu'elle est thermiquement isolée des éléments actifs par les éléments tubulaires thermiquement isolants 22 et 24, soit du fait que son coefficient de dilatation thermique est nul ou même négatif. Par conséquent, la distance qui séparait initialement l'organe de sortie 12 de l'organe d'entrée 10 selon l'axe XX' augmente d'une valeur qui correspond à la somme des allongements des éléments actifs 14 et 16.

On réalise ainsi un déplacement relatif sans jeu entre les organes 10 et 12 sur une distance relativement important et avec une très grande précision. Le caractère multi-étage de l'actionneur selon l'invention permet en effet, en utilisant autant d'éléments actifs que nécessaire, d'accroître la longueur de la course de l'actionneur sans augmenter pour autant la longueur totale de cet actionneur.

Il est à noter que l'ensemble formé par la cloche 18, les lames flexibles 30, 32 et 34 et l'élément passif 18 donne à l'actionneur une raideur en cisaillement, en torsion et en flexion qui lui permet de supporter et de transmettre des charges et des couples importants. En particulier cet ensemble permet aux éléments tubulaires 20, 22, 24 et 26 thermiquement isolants d'être soumis essentiellement à des efforts de traction-compression. Par conséquent, ces éléments thermiquement isolants peuvent présenter des épaisseurs réduites assurant une bonne isolation thermique. De plus, les lames flexibles 30, 32 et 34 autorisent les déplacements relatifs entre les différentes pièces de l'actionneur selon l'axe XX', tout en garantissant les raideurs nécessaires.

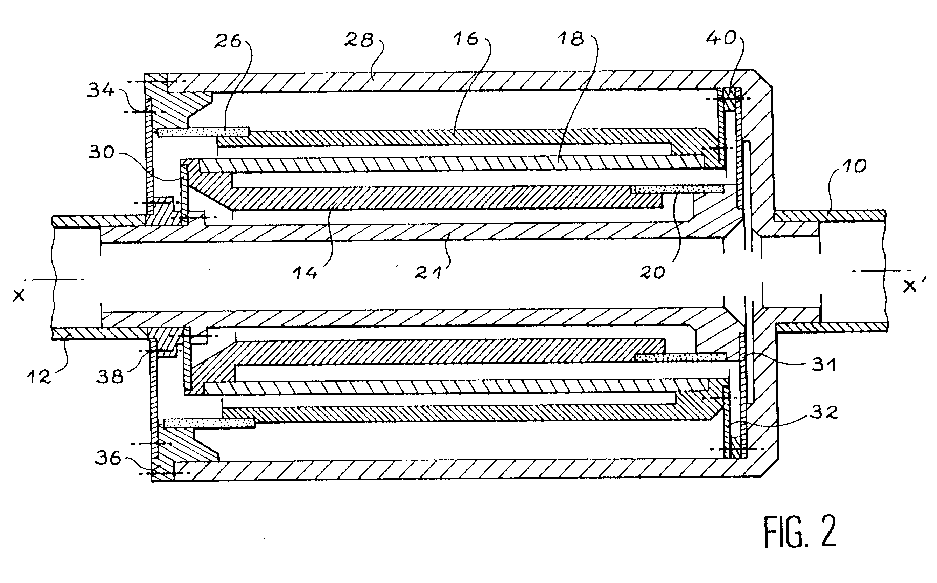

Sur la figure 2, on a représenté un actionneur selon une deuxième forme de réalisation de l'invention. Cet actionneur se distingue du précédent par une raideur accrue en flexion. Cet accroissement de la raideur est principalement obtenu par un allongement du manchon 21, de telle sorte que ce manchon forme un troisième élément passif, disposé coaxialement à l'intérieur de l'élément actif.

De façon plus précise, l'élément tubulaire 20 qui relie le manchon 21 à l'élément actif 14 est alors situé à proximité de l'organe d'entrée 10, si l'on prend pour hypothèse que le manchon 21 est fixé à l'organe de sortie 12, comme dans la première forme de réalisation. L'élément passif 18 interposé entre les éléments actifs 14 et 16 étant à coefficient de dilatation négatif, ses extrémités sont fixées directement sur les éléments 14 et 16. Enfin, l'extrémité de l'élément actif 16 la plus proche de l'organe de sortie 12 est reliée par l'élément tubulaire 26 à une entretoise 36 fixée à l'extrémité ouverte de la cloche 28.

Pour compléter la description, on voit sur la figure 2 que l'actionneur comporte dans ce cas quatre jeux de lames flexibles qui lui confèrent la raideur en cisaillement, en flexion et en torsion désirée, conjointement avec le manchon 21 et la cloche 28. Des lames 34 relient tout d'abord une entretoise 38, fixée sur l'extrémité du manchon 21 solidaire de l'organe de sortie 12, à l'entretoise 36 fixée sur la cloche 28. Des lames 31 relient également une partie de la cloche 28 attenante à l'organe d'entrée 10 à l'extrémité correspondante du manchon 21. En outre, des lames 30 relient l'entretoise 38 à l'extrémité correspondante des éléments actif 14 et passif 18, et des lames 32 reliant l'extrémité des éléments actif 16 et passif 18 attentante à l'organe de sortie 10 à une partie correspondante de la cloche 28. L'espacement entre les lames 31 et 32, à leurs extrémités fixées sur la cloche 28, est assuré par une entretoise 40.

Bien entendu, l'invention n'est pas limitée aux formes de réalisation qui viennent d'être décrites à titre d'exemples, mais en couvre toutes les variantes. Ainsi, comme on l'a déjà noté, l'actionneur peut comprendre autant d'éléments actifs que nécessaire, deux éléments actifs consécutifs étant toujours reliés par un élément passif orienté en sens inverse de ces éléments actifs selon l'axe d'application des efforts. Par ailleurs, si l'actionneur selon l'invention présente avantageusement d'application des efforts. Par ailleurs, si l'actionneur selon l'invention présente avantageusement un axe de symétrie longitudinal, cette disposition n'est pas essentielle.

## Revendications

1. Actionneur thermique, caractérisé par le fait qu'il comprend au moins deux éléments actifs (14,16), aptes à subir une augmentation de longueur dans une direction d'application d'efforts (XX'), sous l'effet d'une élévation de température, et inversement, et au moins un élément passif (18) apte à subir une variation de longueur dans ladite direction inférieure à l'augmentation de longueur de chaque élément actif, sous l'effet de ladite augmentation de température, les éléments actifs (14,16) et passif (18) étant connectés bout à bout en série entre un organe d'entrée (10) et un organe de sortie (12), chaque élément passif (18) reliant deux éléments actifs (14,16) consécutifs en étant orienté en sens inverse de ces derniers, selon ladite direction, de telle sorte que l'actionneur présente dans cette direction une longueur totale sensiblement inférieure à la somme des longueurs des éléments actifs (14,16).

2. Actionneur thermique selon la revendication 1, caractérisé par le fait que les éléments actifs (14,16) et passif (18) sont des éléments tubulaires de diamètres différents disposés coaxialement selon la direction d'application d'efforts.

3. Actionneur thermique selon la revendication 2, caractérisé par le fait qu'il comporte une cloche (28) fixée à l'un (10) des organes d'entrée et de sortie et entourant les éléments actifs (14,16) et passif (18).

4. Actionneur thermique selon l'une quelconque des revendications précédentes, caractérisé par le fait que l'organe d'entrée (10) est relié à un premier (16) des éléments actifs par un premier élément thermiquement isolant (26), l'organe de sortie (12) étant relié à un deuxième (14) des éléments actifs par un deuxième élément thermiquement isolant (20), le premier et le deuxième éléments thermiquement isolants étant disposés selon ladite direction d'application d'efforts.

5. Actionneur thermique selon la revendication 4, caractérisé par le fait que le deuxième élément thermiquement isolant (20) est interposé entre l'organe de sortie (12) et une extrémité du deuxième élément actif (14) adjacente à cet organe de sortie.

6. Actionneur thermique selon la revendication 4, caractérisé par le fait que le deuxième élément thermiquement isolant (20) est interposé entre une extrémité du deuxième élément actif (14) adjacente à l'organe d'entrée (10) et une extrémité correspondante de l'un (21) des éléments passifs, disposé coaxialement à l'intérieur du deuxième élément actif (14) et dont une extrémité opposée est fixée sur l'organe de sortie (12).

7. Actionneur thermique selon l'une quelconque des revendications précédentes, caractérisé par le fait que les éléments actifs (14,16) sont des éléments à coefficient de dilatation thermique positif.

8. Actionneur thermique selon l'une quelconque des revendications précédentes, caractérisé par le fait que l'élément passif (18) est un élément à coefficient de dilatation thermique positif, cet élément passif étant relié aux éléments actifs adjacents par des troisièmes éléments thermiquement isolants (22,24), disposés selon la direction d'application d'efforts.

9. Actionneur thermique selon l'une quelconque des revendications 1 à 7, caractérisé par le fait que l'élément passif (18) est un élément à coefficient de dilatation thermique au plus sensiblement égal à zéro, cet élément passif étant relié directement aux éléments actifs adjacents

10. Actionneur thermique selon l'une quelconque des revendications précédentes, caractérisé par le fait que des moyens de chauffage sont associés aux éléments actifs (14,16).

11. Actionneur thermique selon l'une quelconque des revendications précédentes, caractérisé par le fait que des moyens de refroidissement sont associés aux éléments actifs (14,16).

12. Actionneur thermique selon l'une quelconque des revendications précédentes, caractérisé par le fait qu'il comprend des lames flexibles (30,32) orientées perpendiculairement à la direction d'application d'efforts et reliant l'organe d'entrée (10) à une extrémité voisine de l'élément passif (18) et l'organe de sortie (12) à l'autre extrémité de l'élément passif.

13. Actionneur thermique selon les revendications 3 et 12 combinées, caractérisé par le fait qu'il comprend au moins une autre lame flexible (31,34) reliant l'autre (12) des organes d'entrée et de sortie à l'extrémité de la cloche (28).
